# EUROPÄISCHE PATENTSCHRIFT

(11) **EP 2 847 537 B1**
(45) Veröffentlichungstag und Bekanntmachung des Hinweises auf die Patenterteilung: **19.06.2019**
(21) Anmeldenummer: 13718302.6
(22) Anmeldetag: 20.04.2013
(51) Int. Cl.: F41G 7/00, F41G 7/22, G02B 17/08, G02B 13/14, G02B 26/10

(54) **SUCHKOPF FÜR EINEN FLUGKÖRPER**
SEEKER HEAD FOR A MISSILE
AUTODIRECTEUR DE MISSILE

(30) Priorität: 08.05.2012 DE 102012009172
(43) Veröffentlichungstag der Anmeldung: 18.03.2015
(73) Patentinhaber: Diehl Defence GmbH & Co. KG, 88662 ÜBERLINGEN (DE)
(72) Erfinder: BARENZ, Joachim, 88662 Überlingen (DE)
(74) Vertreter: Diehl Patentabteilung
(86) Internationale Anmeldenummer: PCT/EP2013/001179
(87) Internationale Veröffentlichungsnummer: WO 2013/167236

(56) Entgegenhaltungen:
- EP-A1- 2 267 397
- DE-A1-102007 030 880
- US-A1- 2005 093 757
- US-A1- 2011 073 704

## Beschreibung

Die Erfindung betrifft einen Suchkopf für einen Flugkörper mit einem bildgebenden Detektor, einer eine Eintrittsapertur aufweisende Optikeinheit zum Abbilden eines Zielobjekts in einer Objektszene auf den Detektor und einem Prozessmittel zum Steuern einer Lenkung des Flugkörpers anhand der Abbildung des Zielobjekts auf den Detektor.

Autonome Suchköpfe umfassen einen bildgebenden Detektor mit einer vorgeschalteten Optikeinheit zum Abbilden eines Zielobjekts einer Objektszene auf den Detektor, ein solcher Suchkopf ist beispielsweise in der EP 2 267 397 A1 beschrieben. Die Abbildung wird durch eine Bildverarbeitung auf das Zielobjekt untersucht, das Zielobjekt wird erkannt und während des Flugs des Flugkörpers im Bild verfolgt, sodass der Flugkörper auf das Zielobjekt zugesteuert werden kann. Hierzu ist es notwendig, dass das Zielobjekt mittels bildverarbeitender Methoden von der Umgebung mit ausreichender Sicherheit unterschieden werden kann.

Suchköpfe von Flugkörpern arbeiten üblicherweise im infraroten Bereich, sodass die Wärmesignatur des Zielobjekts mit den bildverarbeitenden Methoden untersucht wird. Dieses Verfahren ist bei der Erkennung von Zielobjekten in der Luft zuverlässig. Befindet sich das Zielobjekt jedoch auf dem Boden, so kann es durch Wärmestrahlung des Hintergrunds, insbesondere von unregelmäßigen Landschaften, für die Bildverarbeitung schwierig sein, das Zielobjekt zweifelsfrei als solches zu erfassen. Insofern stellt eine Bodenzielbekämpfung für eine solche Art autonomer Suchköpfe eine sehr anspruchsvolle Aufgabe dar. Schwierig ist insbesondere die Erfassung von solchen Bodenzielen, die für den Suchkopf anhand ihrer unspezifischen Signaturmerkmale nur schwer gegen den Hintergrund abzugrenzen sind.

Aus dem Stand der Technik, wie beispielsweise der US 2011/073704 A1, der US 2005/093757 A1 oder der DE 10 2007 030 880 A1, sind diverse Suchköpfe bekannt, die neben einem bildgebenden Detektor einen weiteren Detektor, beispielsweise zur Detektion von Laserstrahlung, aufweisen, wobei von einer Objektszene stammende Strahlung über die gleiche Eintrittsapertur einer Optikeinheit auf beide Detektoren gelenkt wird.

Es ist eine Aufgabe der vorliegenden Erfindung, einen Suchkopf für einen Flugkörper anzugeben, mit dem neben Luftzielen auch Bodenziele zuverlässig erfasst werden können.

Diese Aufgabe wird gelöst durch einen Suchkopf gemäß den Merkmalen von Patentanspruch 1.

Die Erfindung geht von der Überlegung aus, dass zu einer Bodenzielerfassung zweckmäßigerweise eine andere Zielsuchlenkung erfolgen sollte, um die Schwächen der ersten Zielsuchlenkung zumindest teilweise auszugleichen. Hierbei ist eine halbautonome Zielsuchlenkung mittels Lasermarkierung des Zielobjekts besonders vorteilhaft, bei dem die Zielauswahl, Zielidentifizierung und Zielmarkierung je nach Einsatzart von beispielsweise einem bodengestützten oder luftgestützten Operator durchgeführt wird. Solche Zielmarkierungen werden üblicherweise in einer Wellenlänge von 1064 nm ausgeführt, wohingegen übliche bildverarbeitende Infraroterkennungsverfahren im Wellenlängenbereich zwischen 3 µm und 5 µm erfolgen. Durch die Verwendung des zweiten Detektors, kann diese andere Zielsuchlenkung vorteilhaft erfolgen. Zweckmäßigerweise ist der zweite Detektor für die Erfassung von Zielmarkierungsstrahlen vorbereitet, insbesondere im Wellenlängenbereich von 1 µm +/- 60 %. Hierdurch kann eine halbautonome Ziellenkung mit einer Zielmarkierung zuverlässig durchgeführt werden.

Entsprechend der Erfindung ist die Optikeinheit so ausgeführt, dass vom Zielobjekt ausgehende Strahlung über die gleiche Eintrittsapertur der Optikeinheit auf den zweiten Detektor gelenkt ist, wie auf den bildgebenden Detektor.

Hierbei geht die Erfindung weiter von der Überlegung aus, dass die Erfassung weit entfernter Ziele besonders zuverlässig unter Verwendung einer großen Eintrittsapertur der Optikeinheit durchführbar ist. Dies gilt sowohl für die bildgeführte Fluglenkung unter Verwendung des bildgebenden Detektors als auch für eine halbautomatische Fluglenkung. Insofern ist eine große Eintrittsapertur für beide Detektoren vorteilhaft. Zwei unterschiedliche und jeweils große Eintrittsaperturen für beide Detektoren führen jedoch zu einem sehr großen Suchkopf mit ungünstigen Flugeigenschaften. Durch die Ausführung der Optikeinheit so, dass die Eintrittsapertur für beide Detektoren nutzbar ist, kann eine hohe Lichtstärke der Optikeinheit mit einer kompakten Bauart des Suchkopfs verbunden werden. Beide Verfahren der Lenkung des Flugkörpers, sowohl mit Hilfe der Daten des bildgebenden Detektors, und/oder durch Verwendung der Daten des zweiten Detektors, können bereits dann durchgeführt werden, wenn sich der Flugkörper noch sehr weit vom Zielobjekt entfernt befindet. Auch an dieser Situation kann das Zielobjekt zuverlässig erfasst und der Flugkörper zuverlässig in Richtung des Zielobjektes gelenkt werden.

Der Flugkörper ist zweckmäßigerweise ein unbemannter Flugkörper, insbesondere ein Lenkflugkörper mit einem Raketenmotor oder ein gelenktes Geschoss, wie beispielsweise ein Artilleriegeschoss. Der bildgebende Detektor ist zweckmäßigerweise ein Matrixdetektor, der insbesondere im infraroten Spektralbereich und zweckmäßigerweise nur dort sensitiv ist, wobei ein sensitiver Bereich zwischen 2,5 µm und 5,5 µm vorteilhaft ist. Die Optikeinheit weist vorteilhafterweise eine Eingangsoptik und eine im Strahlengang nachfolgend angeordnete Abbildungsoptik zum Abbilden des Zielobjekts auf den Detektor auf.

Die Eingangsoptik ist vorteilhafterweise relativ zur Flugkörperachse bzw. Suchkopfachse verschwenkbar, sodass ein großer Raumbereich mit Hilfe der Optikeinheit abgetastet werden kann. Die Verschwenkbarkeit kann eine Nick-Gier-Verschwenkbarkeit oder eine Roll-Nick-Verschwenkbarkeit sein. Das Prozessmittel ist zum Steuern einer Lenkung des Flugkörpers und vorteilhafterweise auch zum Steuern einzelner oder aller der im Folgenden beschriebenen Verfahrensdetails vorbereitet. Dies kann durch ein oder mehrere entsprechende Softwareprogramme, die im Prozessmittel hinterlegt sind, erreicht werden. Hierzu weist das Prozessmittel zweckmäßigerweise zumindest einen Datenspeicher und zumindest eine CPU zum Ablauf des oder der Softwareprogramme auf. Die Lenkung des Flugkörpers kann anhand der Abbildung des Zielobjekts auf den Detektor geschehen, sodass das Prozessmittel zur automatischen Steuerung des Flugkörpers anhand optischer Daten in der Lage ist.

Der zweite Detektor ist zweckmäßigerweise in seiner Art verschieden vom ersten und bildgebenden Detektor. Vorteilhafterweise ist der zweite Detektor ein positionsgebender Detektor. Positionsgebende Detektoren messen Positionen, Winkel, Wege und Bewegungen. Solche Detektoren werden beispielsweise eingesetzt zur automatischen Erkennung und Nachführung von Elementen, zur Zentrierung oder Justierung von Elementen oder zur Aufzeichnung von Bewegungen oder zur Positionsanalyse (siehe beispielsweise http://www.laser2000.de/fileadmin/Produktdaten/DUM/Datenbl%E4tter/DUM-PosDet-Theorie.pdf). Auch Richtungen lassen sich mit Hilfe solcher Detektoren ermitteln. Als positionsgebender Detektor kann beispielsweise ein Richtung angebender Mehrsektorendetektor zum Einsatz kommen, wie etwa ein Vierquadrantendetektor, der zur Richtungserfassung eines Signals relativ zu einer vorgegebenen Richtung des Suchkopfs bzw. Flugkörpers vorbereitet sein kann. Anstelle des Richtung angebenden Mehrsektorendetektors kann auch ein Richtung angebender kontinuierlicher Detektor in Form einer Lateraleffekt-Photodiode verwendet werden. Die Verwendung einer Lateraleffekt-Photodiode ist besonders geschickt, da sich gegenüber dem Einsatz eines Mehrsektorendetektors die Position eines Leuchtflecks und damit eine Richtung genauer bestimmen lässt bzw. diese Bestimmung mit geringerem Aufwand realisierbar ist. Der zweite Detektor ist also zweckmäßigerweise gerade kein bildgebender Detektor.

Weiter ist es vorteilhaft, wenn der zweite Detektor in einem Frequenzbereich sensitiv ist, in dem der erste und bildgebende Detektor nicht sensitiv ist. Vorteilhaft ist ein Frequenzband, in dem eine Zielsignierung üblicherweise stattfindet, also um eine Zielsignierungsfrequenz herumliegt, beispielsweise +/- 100 nm, insbesondere +/- 20 nm. Eine solche Signierfrequenz liegt beispielsweise bei 1064 nm.

Weiter ist es vorteilhaft, wenn die Eintrittsapertur der Optikeinheit verschwenkbar ist. Hierdurch kann ein weiterer Raumwinkelbereich optisch erfasst werden. Besonders vorteilhaft umfasst die Optikeinheit eine Cassegrain-Optik. Mit einer Cassegrain-Optik kann eine sehr große Eintrittsapertur mit einer kompakten Bauweise verbunden werden, sodass beide Detektoren sehr lichtstark beleuchtet werden können.

Eine weitere vorteilhafte Ausführungsform der Erfindung schlägt vor, dass der zweite Detektor in einer Mittenausblendung einer Eingangsoptik der Optikeinheit angeordnet ist. Der zweite Detektor kann auf diese Weise kompakt innerhalb des Suchkopfs angeordnet werden, sodass für ihn nur wenig oder sogar kein eigener Bauraum zur Verfügung gestellt werden muss. Eine Mittenausblendung ist hierbei zweckmäßigerweise eine Position, die rundum von dem von der Eintrittsapertur ausgehenden Strahlengang umgeben ist. Vom Strahlengang ungenutzter Bauraum kann für die Anordnung des zweiten Detektors genutzt werden. Besonders vorteilhaft ist diese Ausführungsform anwendbar in Kombination mit einer Cassegrain-Optik als Eingangsoptik.

Zweckmäßigerweise ist eine Eingangsoptik der Optikeinheit relativ zu einer vorbestimmten Richtung bzw. Achse des Suchkopfs verschwenkbar und der zweite Detektor ist mit der Eingangsoptik verschwenkbar angeordnet, zweckmäßigerweise starr mit der Eingangsoptik verbunden. Ein durch die Eintrittsapertur fallender Strahlengang kann besonders einfach und präzise auf den zweiten Detektor gelenkt werden.

Eine besonders gut mit einer Bewegung der Eingangsoptik synchronisierte Befestigung des zweiten Detektors kann erreicht werden, wenn dieser am Sekundärspiegel einer Cassegrain-Optik befestigt ist.

Gemäß der Erfindung weist die Optikeinheit ein optisches Gelenk auf. Hierdurch kann der Strahlengang aus einer verschwenkbaren Eintrittsapertur auf einen strukturfesten Detektor, der zweckmäßigerweise der bildgebende Detektor ist, gelenkt werden. Das optische Gelenk ist ein Prismengelenk mit zueinander beweglichen Prismen.

Beide Detektoren werden durch den Strahlengang beleuchtet, der durch die Eintrittsapertur in die Optikeinheit fällt. Dieser Strahlengang wird zweckmäßigerweise geteilt, z. B. in zwei Teile, wobei ein Teil auf den ersten Detektor und der zweite Teil auf den zweiten Detektor gelenkt wird. Zur Teilung und Entkopplung der beiden Teile des Strahlengangs ist eine dichroitische Spiegelfläche besonders geeignet, insbesondere an einem Prisma, zweckmäßigerweise an einer Eintrittsfläche des Prismas.

Eine Materialwahl für optische Elemente der Optikeinheit kann vereinfacht werden, wenn der zweite Teil des Strahlengangs, der auf den zweiten Detektor gelenkt wird, vor oder bei Erreichen des ersten transparenten optischen Elements der Optikeinheit vom anderen Teil des Strahlengangs getrennt wird. Der erste Teil des Strahlengangs kann durch das transparente optische Element hindurch geführt werden. Bei dieser Ausführungsform muss das transparente optische Element nur noch für den anderen Teil transparent sein und nicht mehr für den ausgekoppelten Teil. Diese Auskopplung geschieht entsprechend der Erfindung besonders einfach dadurch, dass eine Eintrittsfläche des optischen Gelenks dichroitisch verspiegelt ist. Die Eintrittsfläche ist eine Fläche eines Prismas des Prismengelenks sein.

Eine weitere vorteilhafte Ausgestaltung der Erfindung sieht vor, dass der Suchkopf eine Roll-Nick-Nachführmechanik zum Ausrichten der Eintrittsapertur auf das Zielobjekt aufweist. Eine solche Mechanik kann in Verbindung mit einer großen Eintrittsapertur sehr kompakt bauend hergestellt werden, sodass ein verhältnismäßig kleiner Suchkopf mit hoher Lichtstärke erreichbar ist.

Die Erfindung ist außerdem gerichtet auf ein Verfahren zum Lenken eines Flugkörpers in Richtung eines Zielobjekts, bei dem das Zielobjekt durch eine Optikeinheit auf einen bildgebenden Detektor abgebildet wird und ein Prozessmittel die Lenkung des Flugkörpers steuert.

Es wird ein Verfahren gemäß den Merkmalen des Patentanspruchs 7 vorgeschlagen, bei dem vom Zielobjekt ausgehende Strahlung über die gleiche Eintrittsapertur der Optikeinheit, die für die Abbildung verwendet wird, auf einen zweiten Detektor gelenkt wird. Das Prozessmittel kann nun auswählen, unter Verwendung welchen Detektors es den Flugkörper lenkt. Die Daten des gewählten Detektors werden dann zur Fluglenkung verwendet. Auf diese Weise kann eine Multifunktionalität des Flugkörpers bzw. des Lenkverfahrens zum Lenken des Flugkörpers erreicht werden. Die Auswahl kann von extern erfolgen, also durch einen Befehl von außerhalb des Flugkörpers. Es ist jedoch auch möglich, dass das Prozessmittel die Auswahl eigenständig vornimmt, z. B. anhand der Daten der beiden Detektoren.

Je nach Auswahl steuert das Prozessmittel die Lenkung des Flugkörpers anhand der Daten des bildgebenden Detektors oder des zweiten Detektors. Es ist jedoch auch möglich, dass die Daten von beiden Detektoren verwendet werden, entweder zuerst die Daten von einem Detektor und dann die Daten vom anderen Detektor oder die Daten von beiden Detektoren zeitlich zusammen, sodass die Flugkörperlenkung anhand der Detektordaten beider Detektoren gleichzeitig erfolgt.

Der zweite Detektor ist zweckmäßigerweise als Mehrsektorendetektor oder Lateraleffekt-Photodiode ausgeführt, der bzw. die dazu vorbereitet ist, eine Richtung zum Zielobjekt relativ zu einer vorbestimmten Referenzrichtung zu erfassen. Die Referenzrichtung oder vorbestimmte Richtung kann eine Ausrichtung der Eintrittsapertur sein oder eine Ausrichtung des Suchkopfs bzw. des Flugkörpers. Ist die Richtung zum Zielobjekt vom Prozessmittel anhand der Daten des zweiten Detektors erfasst, führt das Prozessmittel die Ausrichtung der Eintrittsapertur zweckmäßigerweise in Richtung zum Zielobjekt nach, richtet diese also auf das Zielobjekt aus. Dies geschieht insbesondere durch eine Roll-Nick-Nachführmechanik, also durch eine Roll-Nick-Bewegung.

Die oben beschriebenen Eigenschaften, Merkmale und Vorteile der Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- Fig. 1: einen Längsschnitt durch den vorderen Teil eines Lenkflugkörpers mit einem Suchkopf und
- Fig. 2: einen Strahlengang von einem Zielobjekt auf zwei Detektoren des Suchkopfs.

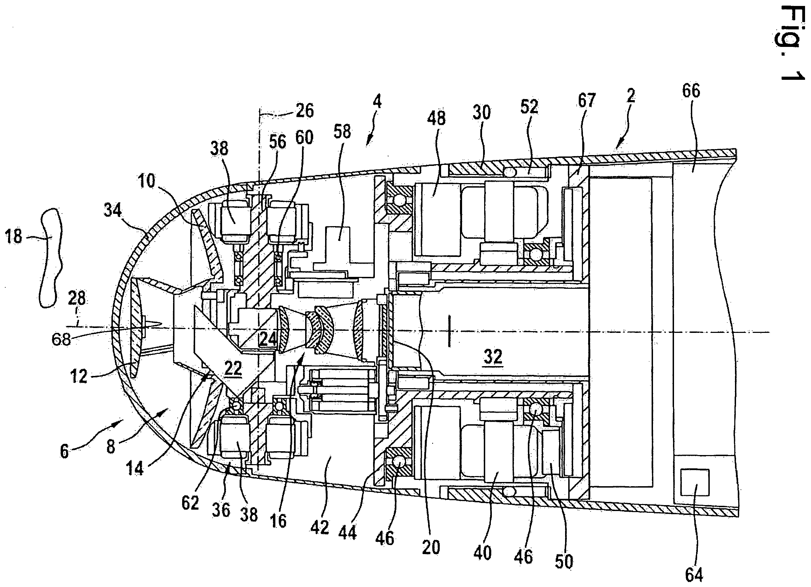

Fig. 1 zeigt in einer schematischen Längsschnittdarstellung den vorderen Teil eines Lenkflugkörpers 2 und dort insbesondere einen Suchkopf 4 an dessen vorderer Spitze. Der Suchkopf 4 ist mit einer Optikeinheit 6 ausgestattet, die eine Eingangsoptik 8 in Form einer Cassegrain-Optik aufweist. Die Eingangsoptik 8 umfasst einen konkaven Primärspiegel 10 und einen konvexen Sekundärspiegel 12. Über ein optisches Gelenk 14 ist die Eingangsoptik 8 optisch mit einer als Detektorobjektiv ausgeführten Abbildungsoptik 16 verbunden, durch die eine Objektszene 18 in Verbindung mit der Eingangsoptik 8 und dem optischen Gelenk 14 auf einem bildgebenden Detektor 20 abgebildet wird.

Das optische Gelenk 14 ist aus zwei Prismenblöcken 22, 24 gebildet, die zueinander beweglich ausgeführt sind. Hierbei ist der erste Prismenblock 22 relativ zum zweiten Prismenblock 24 um eine Nickachse 26 schwenkbar und beide Prismenblöcke 22, 24 sind um eine Rollachse 28 rotierbar, die in der Axialrichtung des Lenkflugkörpers 2 liegt. Der erste Prismenblock 22 ist fest mit der Eingangsoptik 8 verbunden, so dass auch diese um die Nickachse 26 und Rollachse 28 drehbar ist. Die Abbildungsoptik 16 ist fest mit dem zweiten Prismenblock 24 verbunden, so dass sie ebenfalls im regulären Betrieb des Suchkopfs 4 um die Rollachse 28 drehbar ist.

Der Detektor 20 ist starr mit einem Außengehäuse 30 des Suchkopfs 4 beziehungsweise des Lenkflugkörpers 2 verbunden. Ein Kühler 32 dient zum Kühlen des Detektors 20, der im infraroten Spektralbereich zwischen 3 µm und 5 µm empfindlich ist.

Die Erfassung des Sehfelds, das einen Durchmesser von ≥ 5° hat und in dem die Objektszene 18 liegt, erfolgt von der Cassegrain-Eingangsoptik 8 durch einen Dom 34, wobei der Strahlengang über das optische Gelenk 14 und das anschließende Linsensystem der Abbildungsoptik 16 auf den strukturfesten Matrixdetektor 20 geführt wird. Das optische Gelenk 14 erlaubt es, die optische Achse der Eingangsoptik 8 innerhalb eines großen Schielwinkelbereichs von ± 90° zu positionieren, wobei das Sehfeld der Eingangsoptik 8 immer auf den Detektor 20 abgebildet wird. Durch Drehung des gesamten optischen Systems 6 um die Rollachse 28 kann die optische Achse der Eingangsoptik 8 in eine beliebige Richtung der vorderen Hemisphäre positioniert werden.
Die Positionierung der optischen Achse der Eingangsoptik 8 wird durch einen Nickantrieb 36 an der Nickachse 26 mit zwei Teilmomentengebern 38 und einem Rollantrieb 40, der nur einen Roll-Momentengeber aufweist, angetrieben. Der Nickantrieb 36 ist in die beiden Teilmomentengeber 38 zweigeteilt, um zum einen das Bauvolumen optimal auszunutzen und zum anderen um das Trägheitsmoment des gewuchteten Rollrahmens 44 zu minimieren. Hierzu sind die beiden Teilmomentengeber 38 symmetrisch zueinander in Bezug zur Rollachse 28 angeordnet. Außerdem ist jeder der Teilmomentengeber 38 symmetrisch um die Nickachse 26 positioniert. Hierdurch wird eine sehr symmetrische Gewichtsverteilung erreicht, sodass Gegengewichte weitgehend vermieden werden können. Somit kann das Trägheitsmoment des gewuchteten Rollrahmens 44 gering gehalten werden. Die beiden Teilmomentengeber 38 werden von einer gemeinsamen Ansteuerelektronik 42 gesteuert. Dazu sind die komplementären Wicklungen der Teilmomentengeber 38 in Reihe geschaltet und werden von einer gemeinsamen Endstufe angesteuert und kommutiert. Zur Maximierung des Moments sind beide Teilmomentengeber 38 zueinander ausgerichtet, sodass das resultierende Gesamtmoment maximal ist.

Die gesamte Optikeinheit 6 ist im Rollrahmen 44 gelagert, der wiederum durch ein Rollachsenlager 46 gegen das Außengehäuse 30 abgestützt ist. Die Ansteuerung des Rollantriebs 40 wird durch eine Ansteuerelektronik 48 durchgeführt, wobei ein Winkelgeber 50 die genaue Winkelposition des Rollrahmens 44 in Bezug auf eine festgelegte Ausgangsposition sensiert. Durch Ringdämpfer 52 wird eine Dämpfung des Suchkopfs 4 gegen Vibrationen erreicht. Dieses zusätzliche passive Dämpfersystem zwischen dem hinteren Teil des Lenkflugkörpers 2 und einem inertialen Navigationssystem 66, das an einen Trägerflansch 67 befestigt ist, verringert den Einfluss von Körperschall auf das inertiale Navigationssystem 66.

Innerhalb des Rollrahmens 44 ist ein Nicksystem 56 um die Nickachse 26 drehbar gelagert, zu dem auch die Eingangsoptik 8 und der erste Prismenblock 22 gehören. Die aktuelle Winkelposition des Nicksystems 56 wird durch einen Winkelgeber 58 überwacht. Die beiden Winkelgeber 50, 58 sind mit hochgenauen optischen Abgriffen versehen, sodass eine hochgenaue Richtungsbestimmung der optischen Achse relativ zur Suchkopfbasis, beispielsweise relativ zur Rollachse 28 oder einer anderen vorgegebenen Richtung, möglich ist. Das Nicksystem 56 ist in Nickachsenlagern 60, 62 gelagert, wobei das Nickachsenlager 60 ein Festlager ist und das Nickachsenlager 62 ein Loslager. Der Antrieb und die Lagerung des Rollrahmens 44 sind derart ausgeführt, dass der Rollrahmen 44 frei durchdrehbar ist.
Zur Zielverfolgung und zur Steuerung des Lenkflugkörpers 2 ist der Lenkflugkörper 2 mit einem Prozessmittel 64 ausgestattet, das in Fig. 1 nur schematisch angedeutet ist. Zur Steuerung des Lenkflugkörpers 2 stabilisiert das Prozessmittel 64 die inertiale Sichtlinie zu einem Ziel durch eine so genannte Semi-Strap-Down-Rechnung. Hierzu misst ein starr in den Lenkflugkörper 2 integriertes inertiales Navigationssystem 66, das ebenfalls nur schematisch angedeutet ist, die Lenkflugkörperbeschleunigung und Lenkflugkörperrotation in drei Hauptachsen des Lenkflugkörpers 2. Das Navigationssystem 66 besteht aus drei orthogonalen Beschleunigungsbeziehungsweise Rotationssensoren. Durch zeitliche Aufintegration der Bewegungsgleichungen lässt sich zu jedem Zeitpunkt nach dem Start die Position, die Orientierung und die Geschwindigkeit des Lenkflugkörpers 2 in einem inertialen Referenz-Koordinatensystem berechnen.

Weiterhin kann über die hochpräzisen Winkelgeber 50, 58 die Lage der optischen Achse der Eingangsoptik 8 im flugkörpereigenen Koordinatensystem gemessen werden. Als dritte Komponente kann wiederum innerhalb des Sehfelds des Detektors 20 beziehungsweise des Suchkopfs 4 die Winkel-Position eines Punkt-Ziels relativ zur optischen Achse der Eingangsoptik 8 gemessen werden. Diese Messung kann anhand von Bildverarbeitung aus den Daten des Detektors 20 erfolgen. Aus diesen Daten kann nun die momentane Lage der Sichtlinie vom Suchkopf 4 zum Ziel in das flugkörpereigene Koordinatensystem transformiert werden und durch zeitliche Ableitung die für die Flugkörper-Steuerung wichtige Größe der momentanen inertialen Sichtliniendrehrate berechnet werden.

Für eine erfolgreiche Ansteuerung des Ziels wird der Lenkflugkörper 2 vom Prozessmittel 64 so gesteuert, dass die inertiale Sichtliniendrehrate zu Null geregelt wird. Mit Hilfe dieser so genannten Proportionalnavigation steuert der Lenkflugkörper 2 auf energieeffiziente Weise das Ziel an. Ein weiterer Regelkreis führt die optische Achse der Eingangsoptik 8 durch entsprechende Ansteuerungen des Nickantriebs 36 und Rollantriebs 40 so nach, dass die Eingangsoptik 8 immer in Richtung des Ziels ausgerichtet bleibt.

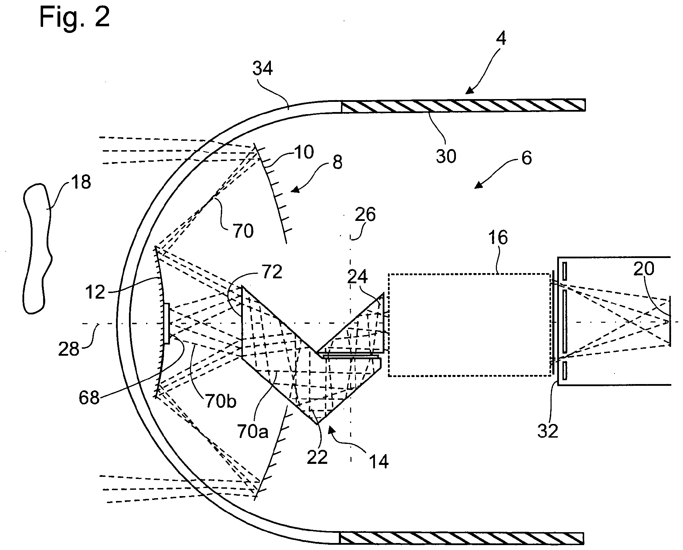

Für die Anwendung als Luft-Boden-Flugkörper weist der Suchkopf 4 einen zweiten Detektor 68 auf, der als 4-Quadranten-Detektor ausgeführt ist. Alternativ ist eine Lateraleffekt-Photodiode möglich und vorteilhaft. Der zweite Detektor 68 ist in einer Mittenausblendung des Sekundärspiegels 12 angeordnet, wie aus Fig. 2 zu erkennen ist.
Figur 2 zeigt eine schematische Darstellung der Optikeinheit 6 im Suchkopf 4, wobei die Abbildungsoptik 16 ebenfalls nur schematisch wiedergegeben ist. Die nachfolgende Beschreibung beschränkt sich im Wesentlichen auf die Unterschiede zum Ausführungsbeispiel auf Figur 1, auf das bezüglich gleich bleibender Merkmale und Funktionen verwiesen wird. Nicht erwähnte Merkmale sind im folgenden Ausführungsbeispiel übernommen, ohne dass sie erneut beschrieben sind.

Zu sehen ist der Strahlengang 70 der Optikeinheit 6, der von der Objektszene 18 kommend über die Eintrittsapertur aufgenommen wird. Die Eintrittsapertur wird vom Primärspiegel 10 gebildet. Bedingt durch die Mittenausnehmung des Primärspiegels 10, in dem das optische Gelenk 14 angeordnet ist, weist der Strahlengang 70 eine Mittenausblendung auf, die von dem vom Primärspiegel 10 auf den Sekundärspiegel 12 umgelenkten Strahlengang 70 zwar umgeben ist, jedoch von diesem nicht beleuchtet ist. Entsprechend weist der Sekundärspiegel 12 einen inneren Bereich auf, der vom Primärspiegel 10 unbeleuchtet bleibt.

In diesem inneren Bereich ist der zweite Detektor angeordnet. Dieser wird zwar durch Strahlung des Strahlengangs 70 beleuchtet, jedoch erst nachdem die Strahlung an einem Strahlteiler 72 in einen ersten Teil 70a und einen zweiten Teil 70b des Strahlengangs getrennt wurde. Während der erste Teil 70a den Strahlteiler 72 passiert und zum ersten Detektor 20 geführt wird, wird der zweite Teil 70b des Strahlengangs 70 bzw. der Strahlung vom Strahlteiler 72 reflektiert und auf den zweiten Detektor gelenkt.

Der Strahlteiler 72 ist als dichroitische Beschichtung der Eingangsfläche des optischen Gelenks 14 ausgeführt. Entsprechend ist das Trennkriterium des Strahlteilers 72 die Strahlungsfrequenz der von der Objektszene 18 einfallenden Strahlung. Strahlung unterhalb einer Grenzwellenlänge, z. B. 2 µm, wird reflektiert, wohingegen langwelligere Strahlung als die Grenzwellenlänge den Strahlteiler 72 passiert.

Die Strahlung des Zielobjekts aus der Objektszene 18, und zwar sowohl die IR-Strahlung des Objekts als auch die reflektierte Laserstrahlung eines Laserdesignators, wird durch eine gemeinsame Eintrittsapertur des Primärspiegels 10 gesammelt, am Sekundärspiegel 12 reflektiert und durch eine dichroitische Filterschicht auf dem Nickrahmenprisma spektral voneinander getrennt. Die weitere Strahlführung des IR-Kanals erfolgt ungestört wie im Fall eines Monomode-Suchkopfs über das Prismengelenk 14 auf den Detektor 20. Das Laserlicht aber wird an der dichroitischen Strahlteilerschicht des Nickrahmenprismas reflektiert und auf den zweiten Detektor 68 mit hohen optischen Abberationen fokussiert.

Der Sehfeldwinkel zum Zielobjekt relativ zur optischen Achse der Eingangsoptik 8 kann aus der normierten Differenz der Stromanteile der Sektoren des zweiten Detektors 68 berechnet werden. Da zur Flugsteuerung nur der Schwerpunkt des reflektierten Laserspots auf dem Zielobjekt bestimmt wird, ist keine gute Abbildungsqualität des optischen Strahlengangs 70b dieses Kanals notwendig.

Die Flugsteuerung durch das Prozessmittel 64 kann in beiden Kanälen, also sowohl über die Daten des ersten Detektors 20 als auch über die Daten des zweiten Detektors 68, über die Daten des Rahmenreglers erfolgen. Dies kann wie folgt geschehen:
Wie beschrieben, ist das Lenksignal bei der Proportional-Navigation, also über die Daten des ersten Detektors 20, die inertiale Sichtliniendrehrate, die zu null geregelt wird, z. B. über einen äußerer Regelkreis oder Lenkregler. Die Sichtliniendrehrate errechnet sich aus den Daten des Rahmenreglers, nämlich der Änderung der Rahmenpositionsabgriffe pro Zeiteinheit, transformiert in das Inertialsystem mit Hilfe der Messung der Eigenbewegung des Flugkörpers 2 in sechs Freiheitsgraden mit dem inertialen Navigationssystem 66.

Zur Zielverfolgung und zur Ableitung des Lenksignals über den zweiten Kanal, also über die Daten des zweiten Detektors 68, wird der Rahmen des Suchkopfs 4, also die Ausrichtung der Eintrittsapertur bzw. des Primärspiegels 10, nun immer so nachgeführt, dass der Spot der Laserbeleuchtung auf dem Zielobjekt in der Mitte des zweiten Detektors 68, z. B. des 4-Quadranten-Detektors oder der Lateraleffekt-Photodiode, bleibt. Dies kann über einen innerer Regelkreis oder einen Rahmenregler erfolgen. Da der zweite Detektor 68 die Ablage zum Zielobjekt relativ zur optischen Achse der Eingangsoptik 8 in kartesischen Koordination misst, die Nachführung aber über das Roll-Nick-System in Polarkoordinaten erfolgt, muss zur Rahmenregelung eine Koordinatentransformation durchgeführt werden.

Praktischerweise kann die sensornahe Elektronik des zweiten Kanals, wie eine Analogsignalaufbereitung, eine Digitalwandlung und eine digitale Signalverarbeitung, auf der Nickrahmenelektronik erfolgen. Allerdings können auch Teile der Signalverarbeitung auf andere Rechenelemente ausgelagert werden, wenn die Rechenkapazität auf dem µ-Controller der Nickrahmen-Elektronik nicht ausreicht.

Da sowohl die Zielobjekt-Strahlung des ersten Kanals als auch des zweiten Kanals vom Prozessmittel 64 auswertbar ist, sind verschiedene Lenkverfahren denkbar. Zunächst kann die Kanalauswahl von einem Bediener erfolgen, der also vorgibt, in welchem Modus geflogen wird, also welcher Detektor zur Flugsteuerung verwendet wird. Es ist auch denkbar, dass ein Algorithmus im Prozessmittel beide Kanäle auswertet. Ein Auswertungsresultat kann zur Auswahl des Kanals verwendet werden, entweder durch den Bediener oder durch das Prozessmittel selber. Ebenfalls möglich ist eine Flugsteuerung unter Verwendung beider Kanäle gleichzeitig oder abwechselnd, um die Vorteile beider Kanäle nutzen zu können.

### Bezuaszeichenliste

- 2: Lenkflugkörper
- 4: Suchkopf
- 6: Optikeinheit
- 8: Eingangsoptik
- 10: Primärspiegel
- 12: Sekundärspiegel
- 14: optisches Gelenk
- 16: Abbildungsoptik
- 18: Objektszene
- 20: Detektor
- 22: Prismenblock
- 24: Prismenblock
- 26: Nickachse
- 28: Rollachse
- 30: Außengehäuse
- 32: Kühler
- 34: Dom
- 36: Nickantrieb
- 38: Teilmomentengeber
- 40: Rollantrieb
- 42: Ansteuerelektronik
- 44: Rollrahmen
- 46: Rollachsenlager
- 48: Ansteuerelektronik
- 50: Winkelgeber
- 52: Ringdämpfer
- 54: Schleifring
- 56: Nicksystem
- 58: Winkelgeber
- 60: Nickachsenlager
- 62: Nickachsenlager
- 64: Prozessmittel
- 66: Navigationssystem
- 68: Detektor
- 70: Strahlengang
- 70a: erster Teil des Strahlengangs
- 70b: zweiter Teil des Strahlengangs.
- 72: Strahlteiler

## Patentansprüche

1. Suchkopf (4) für einen Lenkflugkörper (2) mit
a) einem bildgebenden Detektor (20),
b) einem zweiten Detektor (68),
c) einer eine Eintrittsapertur aufweisenden Optikeinheit (6) zum Abbilden eines Zielobjekts in einer Objektszene (18) auf den bildgebenden Detektor (20), wobei die Optikeinheit (6) so ausgeführt ist, dass vom Zielobjekt ausgehende Strahlung über die gleiche Eintrittsapertur der Optikeinheit (6) auf den zweiten Detektor (68) gelenkt ist, wie auf den bildgebenden Detektor (20), und
d) einem Prozessmittel (64) zum Steuern einer Lenkung des Flugkörpers (2) anhand der Abbildung des Zielobjekts auf dem Detektor (20),
**dadurch gekennzeichnet,**
**dass** die Optikeinheit (6) ein optisches Gelenk (14) aufweist, wobei das optische Gelenk (14) ein Prismengelenk mit einer Eintrittsfläche ist, die dichroitisch verspiegelt ist.

2. Suchkopf (4) nach Anspruch 1,
**dadurch gekennzeichnet,**
**dass** der zweite Detektor (68) ein Richtung angebender Mehrsektorendetektor oder eine Richtung angebende Lateraleffekt-Photodiode ist.

3. Suchkopf (4) nach Anspruch 1 oder 2,
**dadurch gekennzeichnet,**
**dass** die Optikeinheit (6) eine Cassegrain-Optik aufweist.

4. Suchkopf (4) nach einem der vorhergehenden Ansprüche,
**dadurch gekennzeichnet,**
**dass** der zweite Detektor (68) in einer Mittenausblendung einer Eingangsoptik (8) der Optikeinheit (6) angeordnet ist.

5. Suchkopf (4) nach einem der vorhergehenden Ansprüche,
**dadurch gekennzeichnet,**
**dass** der zweite Detektor (68) am Sekundärspiegel (12) einer Cassegrain-Optik befestigt ist.

6. Suchkopf (4) nach einem der vorhergehenden Ansprüche,
**gekennzeichnet**
**durch** eine Roll-Nick-Nachführmechanik zum Ausrichten der Eintrittsapertur auf das Zielobjekt.

7. Verfahren zum Lenken eines Flugkörpers (2) in Richtung eines Zielobjekts, bei dem das Zielobjekt durch eine Optikeinheit (6) auf einen bildgebenden Detektor (20) abgebildet wird und ein Prozessmittel (64) die Lenkung des Flugkörpers (2) steuert, wobei vom Zielobjekt ausgehende Strahlung über die gleiche Eintrittsapertur der Optikeinheit (6), die für die Abbildung verwendet wird, auf einen zweiten Detektor (68) gelenkt wird,
**dadurch gekennzeichnet,**
**dass** über ein Prismengelenk der Optikeinheit (6) mit einer dichroitisch verspiegelten Eintrittsfläche zur Teilung des durch die Eintrittsapertur in die Optikeinheit (6) fallenden Strahlengangs in zwei Teile ein Teil auf den bildgebenden Detektor (20) und ein Teil auf den zweiten Detektor (68) gelenkt wird.

8. Verfahren nach Anspruch 7,
**dadurch gekennzeichnet,**
**dass** das Prozessmittel (64) auswählt, anhand der Daten von welchem Detektor (20, 68) es den Flugkörper (2) lenkt.

## Claims

1. Seeker head (4) for a guided missile (2) with
a) an imaging detector (20),
b) a second detector (68),
c) an optical unit (6) having an input aperture for mapping a target object in an object scene (18) on the imaging detector (20), wherein the optical unit (6) is implemented such that radiation emanating from the target object is diverted to the second detector (68) via the same input aperture of the optical unit (6) as to the imaging detector (20), and
d) a processing means (64) for controlling the guidance of the missile (2) using the mapping of the target object on the detector (20),
**characterized in that**
the optical unit (6) comprises an optical hinge (14), wherein the optical hinge (14) is a prism hinge with an input surface that is dichroitically mirrored.

2. Seeker head (4) according to Claim 1,
**characterized in that**
the second detector (68) is a direction-giving multi-sector detector or a direction-giving lateral effect photodiode.

3. Seeker head (4) according to Claim 1 or 2,
**characterized in that**
the optical unit (6) comprises Cassegrain optics.

4. Seeker head (4) according to any one of the preceding claims,
**characterized in that**
the second detector (68) is disposed in a central masked region of the input optics (8) of the optical unit (6).

5. Seeker head (4) according to any one of the preceding claims,
**characterized in that**
the second detector (68) is attached to the secondary mirror (12) of the Cassegrain optics.

6. Seeker head (4) according to any one of the preceding claims,
**characterized by**
a roll-pitch positioning mechanism for orienting the input aperture to the target object.

7. Method for guiding a missile (2) in the direction of a target object, wherein the target object is imaged by an optical unit (6) on an imaging detector (20) and a processing means (64) controls the guidance of the missile (2), wherein radiation emanating from the target object is diverted to a second detector (68) via the same input aperture of the optical unit (6) that is used for the mapping,
**characterized**
**in that**, by means of a prism hinge of the optical unit (6) with a dichroitically mirrored input surface for dividing the optical path that is incident through the input aperture in the optical unit (6) into two parts, one part is diverted onto the imaging detector (20) and one part is diverted onto the second detector (68).

8. Method according to Claim 7,
**characterized in that**
the processing means (64) selects the detector (20, 68) from which it uses the data to guide the missile (2).

## Revendications

1. Autodirecteur (4) destiné à un missile guidé (2), comportant
a) un détecteur (20) générateur d'images,
b) un second détecteur (68),
c) une unité optique (6) comportant une ouverture d'entrée servant à former une image d'un objet cible situé dans une scène d'objet (18) sur le détecteur (20) générateur d'images, dans lequel l'unité optique (6) est conçue de manière à ce que le rayonnement provenant de l'objet cible soit dévié vers le second détecteur (68), par l'intermédiaire de la même ouverture d'entrée de l'unité optique (6) que sur le détecteur générateur d'image (20), et
d) un moyen de traitement (64) servant à commander un guidage du missile (2) sur la base de l'image de l'objet cible formée sur le détecteur (20),
**caractérisé en ce que** l'unité optique (6) comporte un joint optique (14), dans lequel le joint optique (14) est un joint prismatique présentant une surface d'entrée ayant un revêtement réfléchissant dichroïque.

2. Autodirecteur (4) selon la revendication 1, **caractérisée en ce que** le second détecteur (68) est un détecteur multisectoriel indiquant la direction ou une photodiode à effet latéral indiquant la direction.

3. Autodirecteur (4) selon la revendication 1 ou 2, **caractérisé en ce que** l'unité optique (6) comporte un système optique Cassegrain.

4. Autodirecteur (4) selon l'une des revendications précédentes,
**caractérisé en ce que** le second détecteur (68) est disposé dans un masque central d'un système optique d'entrée (8) de l'unité optique (6).

5. Autodirecteur (4) selon l'une des revendications précédentes,
**caractérisé en ce que** le second détecteur (68) est fixé sur le miroir secondaire (12) d'une optique Cassegrain.

6. Autodirecteur (4) selon l'une des revendications précédentes,
**caractérisé par** un mécanisme de poursuite en roulis-tangage servant orienter l'ouverture d'entrée vers l'objet cible.

7. Procédé de guidage d'un missile (2) dans la direction d'un objet cible, dans lequel l'image de l'objet cible est formée par une unité optique (6) sur un détecteur (20) générateur d'images et un moyen de traitement (64) commande le guidage du missile (2), dans lequel le rayonnement provenant de l'objet cible est dévié vers un second détecteur (68) par l'intermédiaire de la même ouverture d'entrée de l'unité optique (6) que celle utilisée pour la formation d'image,
**caractérisé en ce que**, au moyen d'un joint prismatique de l'unité optique (6) présentant une surface d'entrée portant un revêtement réfléchissant dichroïque et servant diviser le chemin de faisceau incident dans l'unité optique (6) en deux parties, une partie est déviée vers le détecteur générateur d'images (20) et une partie est déviée vers le second détecteur (68).

8. Procédé selon la revendication 7,
**caractérisé en ce que**, sur la base des données, le moyen de traitement (64) sélectionne le détecteur (20, 68) au moyen duquel il guide le missile (2).
